# EUROPEAN PATENT APPLICATION

(11) **EP 2 192 370 A1**
(43) Date of publication of application: **02.06.2010**
(21) Application number: 09177123.8
(22) Date of filing: 25.11.2009
(51) Int. Cl.: F28D 15/00, F24C 15/00, A47L 15/42, D06F 58/20

(54) **Device for vapour condensation and for energy recovery**

(30) Priority: 28.11.2008 IT BO20080716
(71) Applicant: Rivacold S.R.L., 61020 Sant' Angelo In Lizzola (IT)
(72) Inventor: Signoretti, Giorgio, 62011 Gabice Mare (PU) (IT)
(74) Representative: Negrini, Elena

(57) **Abstract**

A device for the condensation of vapour and for the energetic recovery is associable with an apparatus (A) which uses, in a chamber (C) reachable through a door (S), a heated liquid and/or vapour.

Said device comprises at least an evaporator means (1), a compressor means (2) and a condenser means (3) mutually linked by means of a cooling fluid circuit (4) comprising valves, pipes and the like for carrying out an heat pump system where the evaporator means (1) is positioned close to an outlet (U) for the vapour or steam coming out from the chamber (C) for condensing said vapour or steam into liquid avoiding the diffusion thereof into the environment.

## Description

The present invention relates to fittings using heated liquid and/or vapour and in particular it refers to a device for vapour condensation and for energetic recovery fit to avoid the diffusion of vapours into installations and apparatus for cooking, for vapour treatment, autoclaves and particularly for dish-washer of medium and large sizes for industrial and handicraft use.

There are known devices using hot oil, hot water and/or vapours in a chamber for cooking, for treatment or for washing. The vapours of the heated liquids come out from the chamber, particularly through the opening of the respective door for taking products or treated, cooked or washed objects.

Said vapour leakages can damage objects and installations, they are unhealthy for bystanders, are a liquid loss from the devices producing them and can condense onto objects and machines, also in remote manner, damaging these latter.

Another drawback consists in the fact that the known devices do not provide the recovery of condensed vapour.

Further drawback consists in the fact that the known devices do not allow to recover the latent heat in the vapour coming out from them.

An object of the present invention is to provide a device for the vapour condensation and for the energetic recovery which is able to reduce the energetic consumption of the apparatus or installation associated thereto.

Another object is to provide a device fit to recover the condensed liquid.

Further object is to improve the comfort of the environment in which the device is installed.

The characteristics of the invention are evidenced in the followings with particular reference to the attached drawings, in which:
- figure 1 shows a partial and schematic view of the device for the condensation of vapour and for the energetic recovery object of the present invention associated to an apparatus for washing and rinsing of dishes equipped with a washing chamber accessible by means of a door;
- figure 2 shows a partial and schematic view of a first variant of the device of figure 1;
- figure 3 shows a partial and schematic view of a second variant of the device of figure 1.

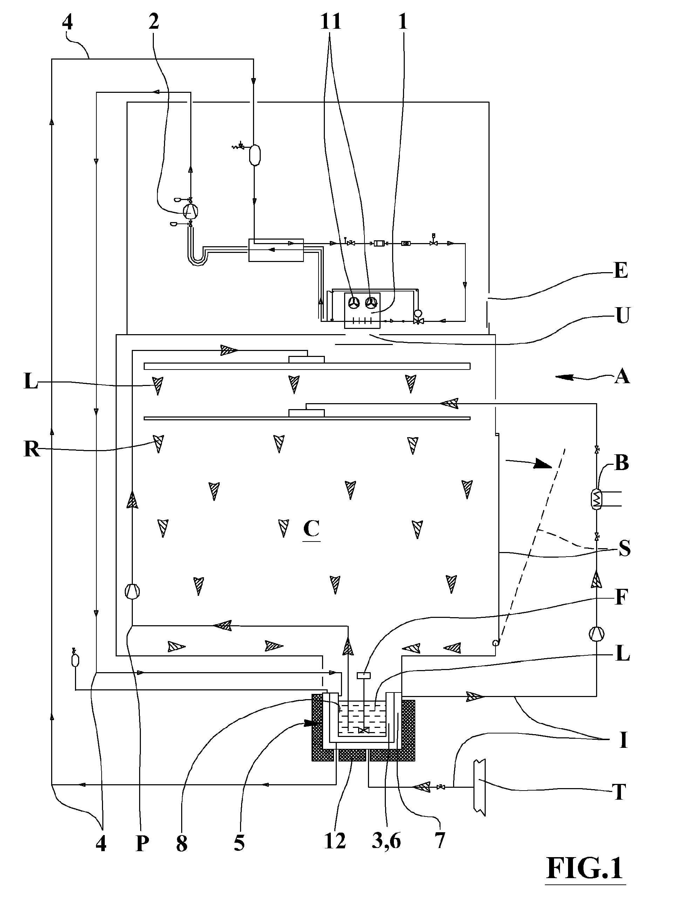

Referring to the figure 1, numeral 1 indicates the device, object of the present invention, for the condensation of vapour coming out from an apparatus A which uses a heated liquid and/or heated vapour and/or steam, and for the energetic recovery at least of the condensation latent heat.

The apparatus A consists, for example, of an apparatus for cooking foods, in an apparatus for vapour product treatment or, preferably and as shown in figure 1, in an industrial machine for washing and rinsing the dishes with hot water. The apparatus A comprises a chamber C where the liquid is used, consisting of water in the case of the dish-washer A of figure 1, and/or the vapour. The chamber is accessible, for inserting and for taking the dishes, by means of a door S having a horizontal rotation axis positioned in correspondent of a lower side of a vertical opening made in a side-wall of the chamber C of the dish-washer A. The device comprises an evaporator means 1, a compressor means 2 and a condenser means 3 connected by means of a cooling fluid circuit 4 comprising valves, capillaries, ducts and similar to carry out a heat-pump installation in which a refrigerating fluid is in circulation.

The evaporator means 1 is positioned in correspondence of an outlet U of the vapour from the chamber C to condense at liquid state, said vapour so preventing the diffusion into the environment.

The evaporator means 1 is provided with suctions means 11, for example, comprising one or more fans which take the vapour from the respective outlet U from the chamber C and forward it onto the external surface of the evaporator means 1 where the vapour releases its heat to the refrigerating fluid and condensates into water.

In particular the suction means 11 can be positioned inside a respective housing and are equipped with an outlet duct that, coming from the evaporator means 1, it flows into the environment installation of apparatus and device.

When the door S is closed, there is not a significant vapour or air passage through the outlet U from the chamber C, and the suction means 11 intake environmental air through an air inlet E carried out in a wall of the housing. Said air inlet E is equipped with a sliding gate or closing movable flaps to adjust the air flow rate and the flow resistance of said air intake through the same inlet E. After a correct adjustment of the inlet E, when the door S of the chamber C is opened, the suction means 11 intake all the vapour through the outlet U from the chamber C. In this manner, when an operator opens the door, no vapour will come out from the opening of the chamber C and the operator is not invested by vapour and the vapour is not diffused into the environment.

The outlet U is carried out in an upper wall of the chamber C and the evaporator means 1 is positioned above said outlet U or above a hopper flowing into the chamber C. In this manner, the liquid obtained by the vapour condensation returns into the chamber C allowing a sensible water or used liquid conversation.

In an alternative and simplified embodiment out the invention, suction means 11 can be equipped with a suction collector having a mouthpiece positioned directly above the door S.

The dish-washer A as shown in figure 1 is equipped with a circulation circuit P of the washing water, one of whose pump takes the washing water from a container 8 or from a collection basin positioned at the bottom of the chamber C. The circulation circuit P, downstream of the pump, brings the pressurized water to a washing rotor which sprays the water onto dishes so washing them; then said washing water is collected in the container 8 which closes the circulation circuit P and where the cycle starts again. The washing water is replaced only rarely.

The dish-washer A comprises also an inlet circuit I of the clean water used by the apparatus A to rinse the dishes.

An inlet of the inlet circuit I takes the water from a duct T, for example from the water network, and brings the water, through a pressure pump and a boiler B fit, if it's necessary, to increase the water temperature, to a rinsing rotor which sprays the water onto the dishes for rinsing them. The rinsing water drips from the dishes and is collected into the container 8 where it mixes with the washing water reintegrating it and then to be reutilized for washing.

The device comprises a heat exchange means 5 associated to the condenser means 3 and to the circulation circuits P and to the inlet circuit I of the liquid used by the apparatus A.

The heat exchange means 5 transfers heat from the refrigerating fluid of the condenser means 3 to the washing water of the circulation circuit P and to the rinsing water of the inlet circuit 1.

In particular the heat exchange means 5 is concave and shaped to form the container 8 with upper opening which comes out into the bottom of the chamber C for collecting the water which is taken by the respective circulation circuit P to be used in the apparatus A.

The heat exchange means 5 comprises a first pipe means 6, for example as tubular interspace or tubular coil, inserted into the cooling fluid circuit 4 and which releases the condenser means 3.

The heat exchange means 5 comprises also a second pipe means 7 in thermal connection with the first pipe means 6, or with the condenser means 3. Said second pipe means 7 is inserted into the inlet circuit I which supplies the liquid to the chamber C.

To improve the thermal change and the efficiency, the container 8 of the heat exchange means 5 can be equipped with an agitator F, for example of propeller type driven by a vertical shaft, and the heat exchange means 5, which forms the container 8, can be equipped with thermal insulation means 12 applied outside thereto.

The operation of the device provides that the heat released from the environmental and from the vapour to the refrigerating fluid into the evaporator means 1 is released from the same fluid to the washing water of the container 8 and to the rinsing water of the second pipe means 7 into the heat exchange means 5.

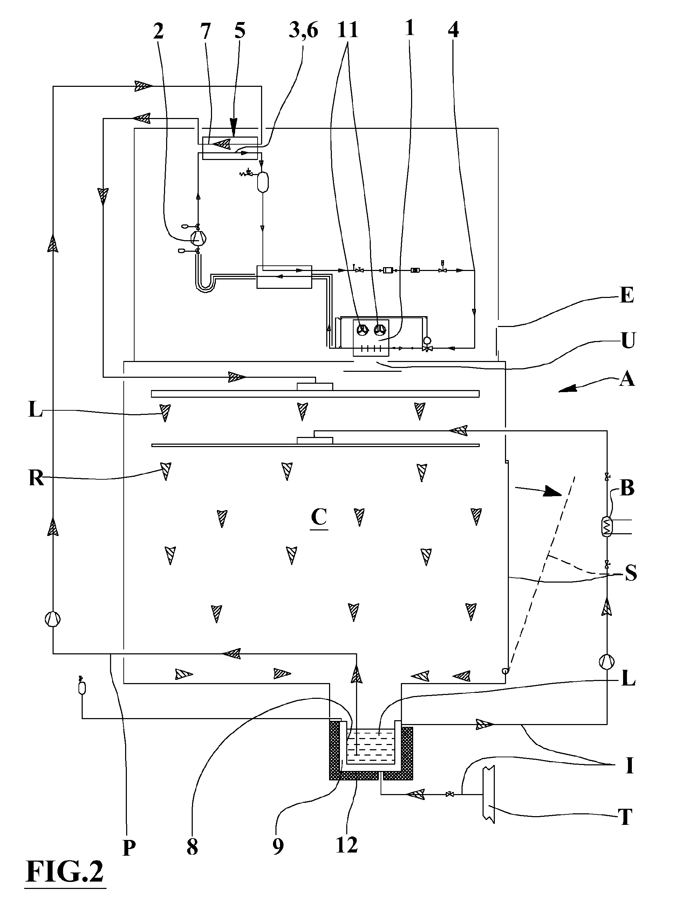

In the variant of the device of figure 2, the heat exchange means 5 is separated from the container 8 or basin of the bottom of the chamber C and which collects the washing water.

The heat exchange means 5 of said variant comprises a first pipe means 6 and a second pipe means 7 in mutual thermal connection and preferably of counter-current type.

The first pipe means 6 is the condenser means 3 and the second pipe means 7 is inserted into the liquid circulation circuit P, for example between the respective circulating pump and the washing rotor.

The wall of the container 8 of said variant shown in figure 2 comprises an interspace or a pipe 9 inserted into the liquid inlet circuit 1.

In this variant, the refrigerating fluid releases heat to the washing water in the heat exchange means 5 and said washing water in the container 8 releases heat to the rinsing water in the interspace or pipe 9 of the same container 8.

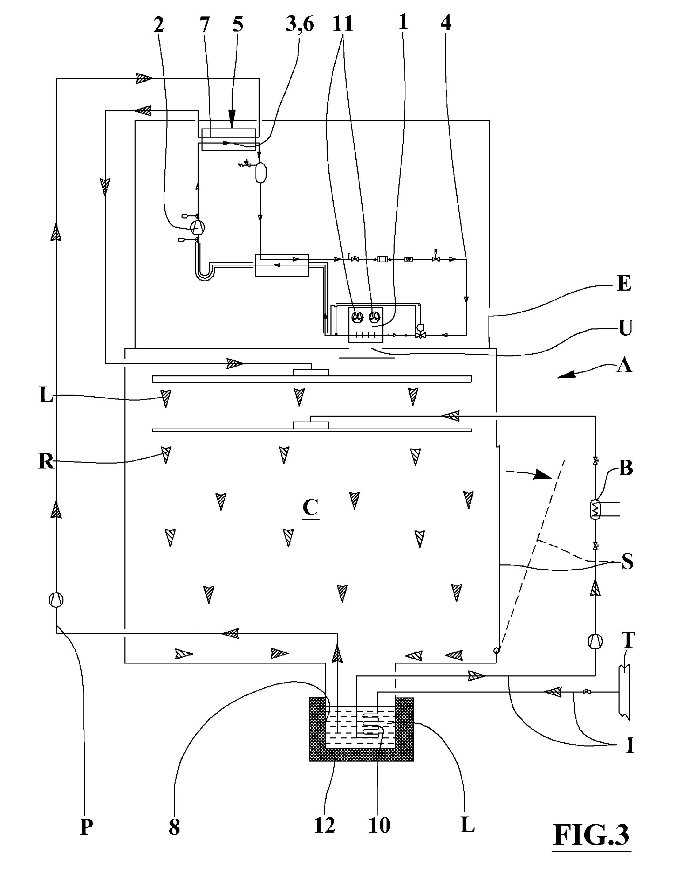

The variant of the device in figure 3 is different from the variant in figure 2 due to fact that the container 8 is not equipped with interspace or pipe 9, but it comprises a tubular coil 10 inserted in the inlet circuit I of the rinsing water that, not only in this variant but also in the previous variant, it is pre-heated by the washing water in the container 8.

An advantage of the present invention is to provide a device for the vapour condensation and for the energetic recovery fit for reducing the energetic consumption of the apparatus or the installation associated thereto.

Other advantage is to provide a device fit to recover the condensed liquid.

## Claims

1. Device for vapour condensation and for energy recovery associable with an apparatus (A) using a heated liquid and/or vapour and/or steam in a chamber (C) reachable through a door (S); said device being **characterized in that** it comprises at least an evaporator means (1), a compressor means (2) and a condenser means (3) mutually linked by means of a cooling fluid circuit (4) comprising valves, pipes and the like for carrying out an heat pump system where the evaporator means (1) is positioned close to an outlet (U) of the vapour coming out from the chamber (C) for condensing said vapour or steam into liquid state avoiding the diffusion thereof into the environment.

2. Device according to claim 1 **characterized in that** it comprises an heat exchange means (5) associated with the condenser means (3) and with a circulation circuit (P) and/or with an inlet circuit (I) of the liquid used by the apparatus (A) where said heat exchange means (5) transfers the heat from the refrigerating fluid of the condenser means (3) to the liquid of the circulation circuit (P) and/or of the inlet circuit (I).

3. Device according to claim 2 **characterized in that** the heat exchange means (5) is concave and shaped as a container (8) whose upper opening comes out into the bottom of the chamber (C) to collect the liquid which is taken by the circulation circuit (P) to be used into the apparatus (A).

4. Device according to claim 2 or to claim 3 **characterized in that** the heat exchange means (5) has a first pipe means (6), being part of the cooling fluid circuit (4) and releasing the condenser means (3), and a second pipe means (7) in thermal connection with the first pipe means (6) and being part of the inlet circuit (I) supplying the liquid to the chamber (C).

5. Device according to claim 2 **characterized in that** the heat exchange means (5) has a first pipe means (6), which forms the condenser means (3), and a second pipe means (7) in thermal exchange with the condenser means (3) and being part of the liquid circulation circuit (P).

6. Device according to claim 5 **characterized in that** it comprises a container (8) whose upper opening is carried out in the bottom of the chamber (C) to collect the liquid drained by the circulation circuit (P) to be used into the apparatus (A); the wall of said container (8) comprises an interspace or duct (9) forming part of the liquid inlet circuit (I).

7. Device according to claim 5 **characterized in that** it includes a container (8) whose upper opening is carried out in the bottom of the chamber (C) to collect the liquid that is drained by the circulation circuit (P) to be used into the apparatus (A); said container (8) houses a coil pipe (10) forming part of the inlet circuit (I) for the liquid.

8. Device according to claim 1 **characterized in that** the evaporator means (1) is provided with suction means (11) to intake the vapour or steam from the chamber (C) through the respective outlet (U) or to intake the environment air from an air inlet (E), the suction means (11) carrying said vapour or air towards the evaporator means (1); said outlet (U) being carried out in an upper wall of the chamber (C) and the air inlet (E) being of adjustable air flow kind to allow the suction means (11) to intake the air from the air inlet (E) when the door (S) of the chamber (C) is closed and to intake also vapour or steam from the outlet (U) when the door (S) is opened.

9. Device according to claim 8 **characterized in that** the evaporator means (1) is positioned upwardly in respect of the outlet (U) of the chamber (C) or in respect of a hopper flowing into the chamber (C) to introduce into the chamber (C) the liquid obtained by the vapour or steam condensation.

10. Device according to any of the claims 3 or 6 **characterized in that** the outside of the container (8) is provided with thermal insulation means (12).
